# EUROPEAN PATENT APPLICATION

(11) **EP 2 003 837 A1**
(43) Date of publication of application: **17.12.2008**
(21) Application number: 07011559.7
(22) Date of filing: 13.06.2007
(51) Int. Cl.: H04L 29/06, H04M 3/54, H04M 3/42, H04Q 3/00

(54) **Method for migration a network subscriber telephone connection, and a telephone network system**

(71) Applicant: Koninklijke KPN N.V., 2516 CK The Hague (NL)
(72) Inventor: Veenstra, Dieter, 2518 HR The Hague (NL); Rooimans, Mazten, 2613 VA Delft (NL)
(74) Representative: Wuyts, Koenraad Maria

(57) **Abstract**

Method for migrating a network subscriber telephone connection (1) from a first telephone network system (N1) to a second telephone network system (N2), wherein the subscriber telephone connection (1) is associated with a subscriber telephone number (n), the migration including (suitable order):
-disconnecting the telephone connection (1) from the first network system (N1); and
-connecting the telephone connection to the second network system (N2), the method being characterized by setting a call forwarding function (CF) of the first network (N1) to forward incoming calls, calling the subscriber telephone number, to the telephone connection via the second network system (N2).

## Description

### FIELD

The invention relates to migration of telephone network connections (particularly network termination points). The invention also relates to a communication network.

### BACKGROUND

The process of migrating (i.e. transferring) end user telephone network connections between telephone network systems as such is commonly known. In a known method, each telephone connection, to be migrated, is first being disconnected from the first network system, and is subsequently being connected to the second network system. For example, a known method involves a shutting down of an outdated central network - part, such as a first telephone communication switching centre being associated with or providing the first network system, to be replaced by an other network part providing the second network system. Usually, such migration processes, usually affecting the telephone connections of large groups of subscribers, are carried out when network use is very low, particularly in a single night, to prevent inconvenience to as many end users as possible. This known method requires a large amount of planning, testing and coordination, since the second network system must be fully operational and connected to all respective network subscriber lines within a single night.

Also, a known migration can involve transferring an individual subscriber connection from a traditional type of network, to an updated network type. For example, the traditional network comprises the well known PSTN (Public Switched Telephone Network) and/or ISDN (Integrated Services Digital Network). Usually, ISDN is considered to be part of the PSTN. Particularly, the traditional network is configured to provide end-to-end circuit switched (digital and/or analogue) connections. The mentioned updated network can be a full IP based network that only uses packet switched communication protocols. This type of migration is usually carried out upon request of the individual network subscriber, for example to obtain new, modern communication facilities (for example ADSL, VOIP, streaming video, et cetera) that can not be provided by the traditional network. This small scale type of migration usually requires a proper planning, is usually carried out at daytime, and asks for cooperation of the subscriber. Usually, a specific migration date and migration time period will have to be planned, and the subscriber will have to accept that he will not be certain of having any network connection during the respective migration period. Particularly, it can take a long time period for the network operator to finalize the migration (usually involving adjusting the settings in the commonly known Intelligent Network), such that incoming calls will reach the subscriber via the proper network system. In order to reduce such long time periods, the operator can set smaller migration time frames within which certain steps have to be performed, however, that will lead to a considerable time pressure for the operator to conclude the respective migration steps in time. Besides, application of smaller time frames can lead to significant planning problems in the case that one of the steps takes longer than planned (for example in case of unexpected technical difficulties to conclude a migration step).

On the other hand, it is presently desired to migrate individual subscriber connections from a traditional type of network to an updated network type, without:
- the respective subscribers actually requesting such migration;
- any action (e.g. happy call after connecting the telephone connection to the second network system) of the respective subscriber;
- a possibility to have the respective subscribers connected to both the traditional network and the updated network during the migration period;
- availability of a signal in either of the networks to detect when the connection is disconnected from the traditional type of network and connected to the updated network type.

After all subscriber connections have been disconnected from the traditional network system, the traditional network system can be substantially shut down. Due to the above problems and restrictions, none of the traditional ways of migration telephone connections appear to be suitable for this aim.

### SUMMARY

An object of the present invention is to provide a method for migrating a network subscriber telephone connection, wherein inconvenience to the respective end user can be avoided as much as possible.

According to an embodiment of the invention, there is provided a method for migrating a network subscriber telephone connection from a first telephone network system to a second telephone network system, wherein the subscriber telephone connection is associated with a subscriber telephone number, the migration including:
- disconnecting the telephone connection from the first network system; and
- connecting the telephone connection to the second network system, the method being characterized by setting a call forwarding function of the first network to forward incoming calls, calling the subscriber telephone number, to the telephone connection via the second network system.

In this way, the migration can be carried out in an efficient manner, wherein inconvenience to the respective end user can be significantly reduced.

In a further embodiment the method can include provisioning and copying all subscriber settings from the first network system to the second network system. The method can include setting the call forwarding function at the first network to guarantee the reach ability of the subscriber for incoming calls during the migration.

The method preferably includes, to finalize the migration at any later moment in time (that is convenient to the network operator), adjusting of routing for the subscriber telephone number towards the second network system.

According to a further embodiment, groups of subscriber telephone connections are migrated using the present method. The method can be repeated until all subscriber telephone connections have been disconnected from the first network system and have been reconnected to the second network system. Subsequently, the first network system can be at least partly (preferably substantially) shut down. Such a migration process, involving a large number of telephone connections, can involve a long migration period (of months or years). The process can be carried out in a way that suits the respective network operator, for example in view of planning, logistics, workload distribution of local migration teams, without burdening the respective subscribers with the migration process.

Particularly, a main idea of the invention is to use the call forwarding (or diverting) functionality of the network as part of the migration process. In this way, incoming calls (i.e. requests of callers, the requests including the subscriber telephone number, to be connected to the respective telephone connection associated with the telephone number) can be redirected to the called party (i.e. his/her telephone connection) automatically.

Preferably, the call forwarding is a CFNR (Call Forwarding No Reply) network function. CFNR as such is commonly known (in the Netherlands, a subscriber can activate this function using the 61 service code). This function is configured to redirect the incoming call only after a predetermined delay, for example a delay of one or more seconds (usually, the CFNR utilizes a delay of about 20 seconds, before the incoming call is being forwarded). As a result, a relatively loose scheduling to perform the switching of network connection in the local network unit can be applied, wherein any time pressure to swiftly perform the actual physical switch can be avoided.

The present invention is particularly advantageous in case the first network system is a circuit switched system, and the second network system is a packet switched system, particularly an IP network.

Besides an embodiment of the invention provides a communication network, at least comprising:
- a circuit switched telephone network system;
- a packet switched telephone network system;
- at least one subscriber telephone connection, associated with a respective subscriber telephone number; and
- at least one local network distribution unit to interconnect the at least one subscriber telephone connection to the telephone network systems;
the telephone network system being characterized by a migration support mechanism that is configured to be operated by a network migration operator to support migration of the telephone connection from the circuit switched telephone network system to the packet switched telephone network system, wherein the migration support mechanism includes a call forwarding system of the circuit switched telephone network system.

Also, according to an embodiment, advantageously, there is provided the use of a telephone network call forwarding system as part of a subscriber telephone connection migration process, wherein the respective subscriber telephone number is entered into the telephone network call forwarding system, together with a migration indicator, wherein the migration indicator is selected to be automatically used to redirect incoming calls to the subscriber telephone connection via a network system to be migrated to.

Further advantageous embodiments of the invention are described in the dependent claims. These and other aspects of the invention will be apparent from and elucidated with reference to non-limiting embodiments described hereafter, shown in the drawings.

### BRIEF DESCRIPTION OF THE DRAWINGS

Figure 1 schematically depicts an embodiment of the invention, before migration;
Figure 2 schematically depicts the embodiment during migration; and
Figure 3 schematically depicts the embodiment after migration.

### DETAILED DESCRIPTION

Similar or corresponding features are denoted by similar or corresponding reference signs in this application.

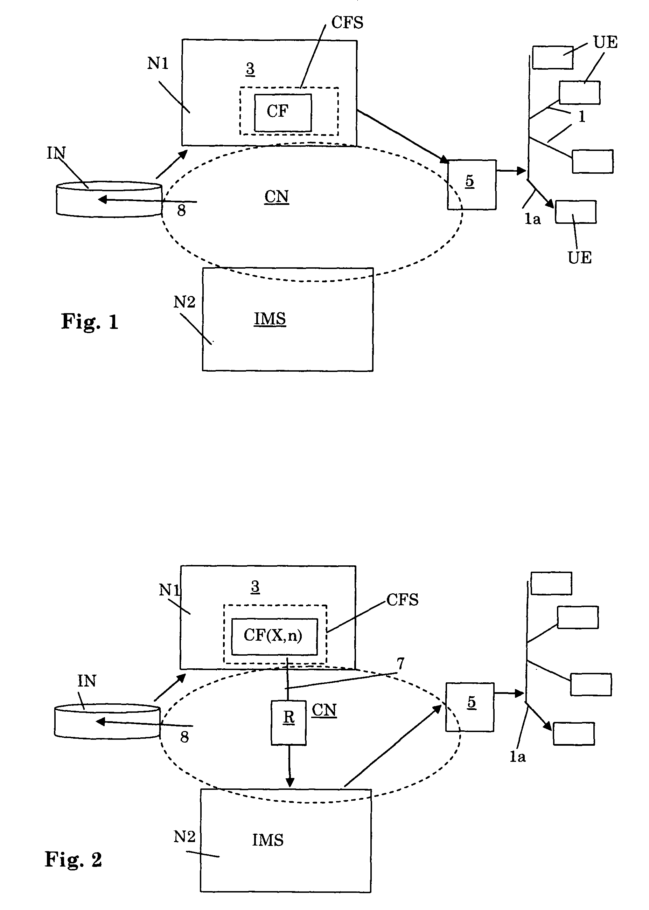

Figure 1 schematically depicts part of a communication network CN. The network CN is designed to provide communication connections between subscriber telephone connections 1 of end users, so that user equipment UE of end users can communicate with each other over the network CN. Each subscriber telephone connection 1 can be associated with a respective subscriber telephone number n.

The communication network CN can comprise one or more first telephone network systems N1 (only one shown), particularly circuit switched telephone network systems N1. For example, the first network system N1 can be a traditional hierarchic circuit switching network N1. The circuit switched network N1 can be configured to set up a dedicated communication channel between end-nodes (user terminals UE) before respective users can communicate. During a call, respective communication will follow a single route through the network N1. The traditional system N1 can comprise, amongst others, a number of central (PSTN) telephone switching centers 3, for example TDM (time division multiplexing) systems, as well as a number of local network distribution units 5 (only one shown in Fig. 1), and transmission means between local units 5 and the respective central telephone switching centre 3. Generally, there can a very large number (for example hundreds or thousands) of such local units 5 to provide a final distribution of telephone communication to a much larger number of end-users.

The mentioned transmission means can include telephone communication lines (preferably substantially comprising optical communication lines via glass fiber cabling), intermediate communication control and/or distribution units, and other suitable transmission means, known to the skilled person. A number of local telephone connections 1 can be connected to each of the local distribution units 5, for example via cabling, particularly traditional copper wires and/or glass fiber cabling. The local unit 5 can provide a local (for example having a relatively low hierarchy level in the network N1) means for interconnecting respective subscriber telephone connections 1 to the first telephone network system N1. The traditional network system N1 can be configured to provide traditional analogue and/or digital circuit switched telephone communication.

The communication network CN also comprises at least one second network system N2, for example a packet switched telephone network system N2. This second network system N2 particularly only uses the commonly known IP protocol for communication, for example for the transmission of video, data, voip (voice over IP) et cetera, and can include a commonly known IMS (IP Multimedia Subsystem) based network or a commonly known SS (Soft Switch) based network. For example, the second network N2 can be an Ethernet or an "All IP" type of network that does not execute any type of circuit switched telephone communication. As is known to the skilled person, a packet switched network N2 provides data links that can be shared by different communication processes (for example voip calls). Also, in a packet switched network N2, a voip call can follow different routes through the network during the call.

In an alternative embodiment, the second network N2 can be a different type of network, for example a circuit switched network.

The local network distribution units 5 are known as such, and can also be configured to interconnect respective subscriber telephone connections 1 to the second network system N2. For example, transmission means can be provided between the local unit 5 and the IMS (or SS), such as telephone communication lines (preferably substantially comprising optical communication lines via glass fiber cabling), intermediate communication control and/or distribution units, and other suitable transmission means.

Preferably, each local network distribution unit 5 can be controlled (typically by local manual action) to choose, which of the networks N1, N2 is to be connected to each of the end user telephone lines 1 (and therefore, what type of telephone communication -i.e. circuit switched or packet switched- is to be carried out over the respective connection 1). For example, in the case that a certain end user of a first communication connection la desires to migrate from a traditional circuit switched network connection to a packet switched network, a network operator can carry out the migration, including a step of locally adjusting the settings of the local distribution unit 5.

Thus, the local network distribution unit 5 can be configured to interconnect the at least one subscriber telephone connection 1 to the two telephone network systems N1, N2, one at a time. Besides, to this aim, the local network distribution unit 5 can comprise part of the first network system N1, and part of the second network system N2. As an example, part of the IMS (or SS) can be integrated in each of the local units 5. Besides, communication connections between the local unit 5 and respective end user telephone network termination points are usually fixed (wired) telephone connections 1.

Besides, the first network system N1 comprises a commonly known call forwarding system CF. The known first network system N1 is configured to allow a network subscriber, associated with a telephone connection 1, to set the respective call forwarding function.

For example, the call forwarding system CF can include the CFNR (Call Forwarding No Reply), the CFU (Call Forwarding Unconditional), the CFB (Call Forwarding Busy), or an other call forwarding operation. CFNR is the forwarding of an incoming call, i.e. a caller calling a certain telephone number, to a predefined telephone number after a certain delay (for example 20 seconds). During the delay the call will not yet be forwarded, but will be directed to the called telephone number.

CFU is the forwarding of each incoming call to the predefined telephone number without any delay. CFB is the forwarding of an incoming call only when the associated line of the called telephone number is busy.

The setting of the call forwarding function can simply be achieved by the end user, in the Netherlands for example by using the service code 61 to activate (*61*<destination-nr>#) and deactivate (#61#) CFNR, or by using the service code 21 to activate and deactivate CFU, or by using the service code 67 to activate and deactivate CFB, using his/her user equipment UE and telephone connection 1.

For example, the call forwarding system CF can comprise a memory or databank that includes memory parts to store telephone numbers to which incoming calls are to be forwarded; the contents of the memory parts can be adjusted by the subscribers by setting their respective call forwarding functions.

The skilled person will appreciate how the process of calling a telephone number usually evolves, a telephone call (i.e. calling a telephone number of a subscriber) including a request (of a caller) to set up a telephone communication connection with the network termination point (telephone connection 1) associated with the called telephone number.

Besides, the communication network CN can comprise an IN (Intelligent Network), known as such to the skilled person. The IN is a network overlay function that can direct calls to desired network parts. For example, the IN can include a database that can include information of end user telephone network subscriptions, for example, the telephone network operator that is associated with each of the end users, and the respective type of network (for example circuit switched or packet switched) to which each end user is subscribed. In the case that a subscriber desired to migrate his/her telephone connection to the packet switched network N2, the respective migration will include a step of updating the respective subscriber information in the IN.

The communication system CN described thus far with respect to the drawing is known as such to the skilled person, and has several disadvantages. Particularly, the system CN includes a traditional network system N1. It is expected that in the future, all telephone communication will only use packet switched telephone network communication, which makes a major part of the circuit switched network redundant. It is an aim to disconnect a major part of the circuit switched network N1, including migration of end user connections 1 to the packet switched network system N2, without the causing inconvenience to the end users.

According to a preferred embodiment, the telephone network system is provided with a migration support mechanism CFS that is configured to be operated by a network migration operator to support migration of an user telephone connections 1 from the circuit switched telephone network system N1 to the packet switched telephone network system N2, wherein the migration support mechanism includes a call forwarding system CF of the circuit switched telephone network system N1. Herein, preferably, the call forwarding system is the CFNR system, configured to forward incoming calls after a predetermined delay (for example a delay in the range of about 10 to 20 seconds).

According to a further embodiment (see Fig. 2), the migration support mechanism is configured to enter a migration indicator X and the respective subscriber telephone number n into the call forwarding system CF, wherein the migration indicator is associated with the second network system N2. Then, the first network system N1 can be configured to redirect any calls that include the migration indicator X, to the second network system N2. For example, the migration indicator X can be a code or flag to the communication network CN (particularly to the first network N1), that the second (packet switching) network N2 has to take over and carry out the call forwarding, and/or that the second network N2 has to receive the forwarded call.

Preferably, transmission of each such call forwarded from the first network system N1 to the second network system N2 is not controlled by the intelligent network IN. For example, the migration support system or mechanism CFS can include a dedicated call forwarding communication link 7 (see Fig. 2) between the first and second network system N1, N2, to forward the calls directly to the second network system N2 without interference from the intelligent network IN.

In an embodiment, the communication network CN can be configured to remove the migration indicator X from the forwarded call, before the forwarded call reached the second network system N2. For example, the first network system N1 and/or mentioned call forwarding communication link 7 can be provided a migration indicator removing function R to carry out the removing of the indicator X, before the forwarded call reached the second network system N2. Besides or alternatively, the second network system N2 can be configured to detect migration indicator X in received calls, to carry out the removing of the indicator X.

Also, for example, the second network system N2 can be configured to forward or transmit the call, transmitted from the call forwarding function/system CF of the first network system N1, to the respective subscriber telephone connection 1 (via the respective local unit 5).

For example, according to a preferred embodiment, the migration indicator X includes or consists of a phone number prefix specifically relating to (being reserved for) the second network system N2. Preferably, the migration indicator X consists of a predefined number, for example a predefined dialing code, that is associated with the second network system N2. The migration indicator X can indicate that the telephone number n, entered into the call forwarding system CF, is to be called via the second network system N2.

In this way, there can be provided a method for migrating a network subscriber telephone connection 1a from the first telephone network system N1 to a second telephone network system N2, wherein a first subscriber telephone connection 1a is associated with a subscriber telephone number n, the migration including, in a suitable order:
- disconnecting the telephone connection 1a from the first network system N1; and
- connecting the telephone connection to the second network system N2,
the method being characterized by setting the call forwarding function CF of the first network N1 to forward incoming calls 8, calling the subscriber telephone number n, to the telephone connection via the second network system N2.

Herein (as in prior art methods), the disconnecting of the telephone connection from the first network system N1 is carried out without being detectable by regular call handling functions in the first network system N1. Besides, the connecting of the telephone connection to the second network system N2 is carried out without being detectable by the regular call handling functions in the second network system. This is due to the common configuration of telephone networks, wherein each "on the hook" user device UE (for example user terminal or phone) is associated with an open line.

Particularly, in Figures 1-3, a route of the incoming call 8 to the subscriber line 1a is being indicated by arrows. Fig. 1 shows the situation before start of the migration of the telephone connection 1a. In this case all incoming calls 8 (schematically indicated by an arrow 8) are routed to the circuit switched network system N1, under control of the intelligent network layer IN. The first network system N1 directs the incoming call 8 to the respective local distribution unit 5, which transmits the call to the respective telephone connection 1a.

In a next step of the migration, the network operator preferably reads certain subscriber settings relating to the telephone connection la. For example, such subscriber settings can include voice mail information, carrier preselect data, call forwarding settings and/or other telephone connection settings. These subscriber settings can be stored, to be loaded into the second network system N2 at a suitable time of the migration. For example, certain static user settings (such as voice mail settings) can be loaded into the second network system N2 at an early stage of the migration, and certain dynamic settings (such as user defined call forwarding settings) at a later stage (ideally just before the actual migration takes place). This ensures that all service settings of the subscriber will be maintained and will act the same when the subscriber is migrated to the second network system N2. This also applies to the settings of the CFNR service that is commonly used by subscribers to redirect unanswered calls to for example a network based voicemail system.

Preferably after the storing of certain subscriber settings and ideally just before the actual migration takes place, to provide a smooth migration and to limit the inconvenience to the respective subscriber as much as possible, the network operator can set or adjust the call forwarding system CF of the first network N1, by entering the subscriber telephone number n of the connection 1a to be migrated itself, as well as entering the migration indicator (for example prefix) into the CF.

Herein, according to an embodiment, the network operator enters the prefix reserved for (associated with) the second network system N2 in combination with a subsequent telephone number n, into the respective subscriber memory part (allocated to the subscriber of the telephone line 1a) of the call forwarding system CF.

Preferably, the setting of the call forwarding to forward any incoming calls 8 to the second network system N2 is carried out independently of the network subscriber, without the subscriber knowing or being informed that the migration takes place. For example, the communication network CN can include a suitable input means, for example a terminal or interface, to be used by the network operator for adjusting the settings of the call forwarding system CF (i.e. entering the code X and telephone number n) of the first network system N1.

As a result, the first network system N1 automatically redirects any incoming calls 8, after a certain delay in case of the CFNR function, to the second network system N2. Particularly, incoming calls 8 to the subscriber telephone number n will be forwarded to the same telephone number n, but via a different network part N2 (and particularly without interference of the intelligent network IN, see below).

Figure 2 depicts such a forwarding of incoming calls 8 to the user subscriber line 1a via the second network system N2. Herein, calls can be diverted via the dedicated communication link 7. In a non-limiting embodiment the communication removes the migration indicator X from the forwarded call, before the forwarded call reaches the second network system N2, for example using the migration indicator removing function R. Alternatively, the second network system N2 detects the migration indicator X in received calls, to carry out the removing of the migration indicator X.

The second network system N2 can automatically forward or transmit the call, transmitted to that system N2 via the communication link 7 by the call forwarding part CF of the first network system N1, to the respective subscriber telephone connection 1. To this aim, the second network system N2 can read the telephone subscriber number n from the call (or call request), as will be appreciated by the skilled person, to determine the destination (i.e. the respective subscriber connection 1a) of the (forwarded) telephone call.

In an embodiment, in case the migration indicator is being forwarded to the second network system N2, the second network system N2 can detect the migration indicator X in the forwarded calls, and can be triggered by the migration indicator X to forward the call directly to the respective subscriber telephone connection 1 (without interference from the intelligent network IN).

In yet another embodiment, communication over a predetermined communication link 7 as such (set up by the CFNR of the first network system N1) can serve as an indication to the second network system N2 that telephone calls forwarded over that link 7 are in a migration process. In that case, the second network system N2 can forward any call received via that specific communication link 7 directly to the respective subscriber telephone connection 1 (without interference from the intelligent network IN).

Besides, during the migration process, other migration steps can be carried out. For example, the second network N2 can be prepared, for allowing telephone traffic with the respective subscriber connection la via the respective local unit 5. The preparation can include loading abovementioned static subscriber settings, relating to the telephone connection 1a under migration, into respective parts of the second network system N2.

An important step of the migration involves (involved) the physical disconnecting of the telephone connection 1a from the first network system N1 (wherein this disconnecting step can not be detected by regular call handling functions in the first network system N1). Preferably, at the same time or soon thereafter, the telephone connection la is being (physically) connected to the second network system N2 (which is not detectable by the regular call handling functions in the second network system). This switch of network connection is usually made locally, in the local network unit 5, and can for example involve adjusting hardware and/or software settings of the local distribution unit 5, removing and inserting communication connectors and/or a different type of operation.

Preferably, the setting of the call forwarding function CF is executed before disconnecting the telephone connection 1a from the first network system N1.

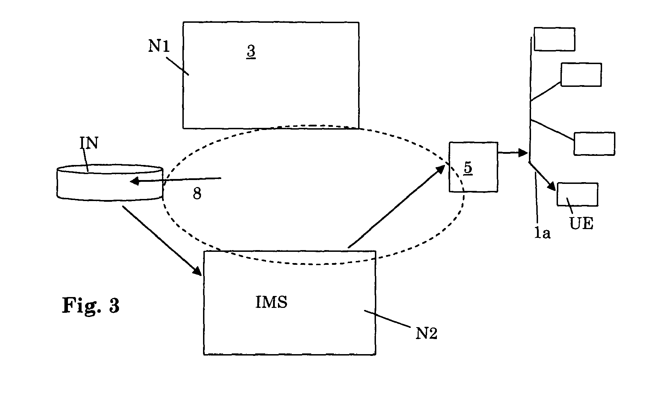

Moreover, final steps of the migration process can include updating the intelligent network IN with the migration of the network subscriber telephone connection la, preferably after the telephone connection has been connected to the second network system N2. After that, mentioned dynamic subscriber settings can also be loaded into the second network system N2. A resulting network is depicted in Fig. 3, wherein all incoming calls 8 run directly via the second network system N2. Therein, major parts of the circuit switched network system N1 are at least redundant in view of telephone communication towards/from the respective telephone line la.

The above steps allow the network operator to migrate the telephone connection 1a without the end user (subscriber) being much affected by that process, particularly in view of incoming calls 8 reaching the terminal connection 1a of the subscriber.

For example, when the CFNR function has been set by the network operator (see Figures 1-2), an incoming call 8 will first be directed over the first network system N1 to the subscriber connection la during a first time period (i.e. the call forwarding delay). In case the terminal connection 1a is still connected to the first network system N1, the subscriber will receive the call, as in Fig. 1. In case the terminal connection 1a has been switched to the second network system N2, but the migration has not yet been entered into the intelligent network layer IN, the subscriber will receive the call as well, as in Fig. 2 via the second network system N2, due to the CFNR call forwarding operation. When the migration process has finished and the intelligent network IN has been updated, all incoming calls will be transferred directly via the second network system (see fig. 3).

Herein, a relatively loose scheduling to perform the switching of network connection in the local network unit 5 can be applied, wherein any time pressure to swiftly perform the actual physical switch can be avoided. The same holds for updating the intelligent network platform IN. Besides, contrary to known methods, this update does not have to be performed immediately after the local switch has been concluded (in order to avoid that the respective end-user can not be called during an intermediate time period). The CFNR set by the operator can simply insure that the respective end-user can still be called during such intermediate time period.

In a further embodiment, the above-described process can be carried out for all end user telephone connections 1 in a certain cost-efficient sequence, wherein for example only one or a small number (group) of connection(s) is/are migrated at a time. The overall cumulative migration period can be relatively long (for example extending over several years, in case for example over 1 million subscriber lines are to be transferred to the second network system N2). In this way, for example, a large circuit switched network system N1 can be substantially replaced by Ethernet or Ethernet parts. By actively using the CFNR function of the first network system N1 in the migration process, migration is beneficial to both network operators and end-users.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

For example, the subscriber telephone connection 1 can be associated with one or more subscriber telephone numbers n, and the call forwarding system can be used to forward incoming calls, calling each of the respective subscriber telephone numbers n, to the telephone connection 1 via the second network system N2.

## Claims

1. Method for migrating a network subscriber telephone connection (1) from a first telephone network system (N1) to a second telephone network system (N2), wherein the subscriber telephone connection (1) is associated with a subscriber telephone number (n), the migration including:
- disconnecting the telephone connection (1) from the first network system (N1); and
- connecting the telephone connection to the second network system (N2),
the method being **characterized by** setting a call forwarding function (CF) of the first network (N1) to forward incoming calls, calling the subscriber telephone number (n), to the telephone connection via the second network system (N2).

2. Method according to claim 1, wherein the first network system (N1) is a circuit switched system, particularly a PSTN system, and the second network system (N2) is a packet switched system, particularly an IP network.

3. Method according to claim 1 or 2, wherein the first network system (N1) is configured to allow a network subscriber, associated with the telephone connection (1), to set the call forwarding function, wherein the setting of the call forwarding to forward the incoming calls to the second network system (N2) is carried out independently of the network subscriber.

4. Method according to any of the preceding claims, wherein the second network system (N2) is configured to forward the call, transmitted from the call forwarding function of the first network system (N1), to the subscriber telephone connection (1).

5. Method according to any of the preceding claims, wherein the setting of the call forwarding function (CF) of the first network at least includes entering the subscriber telephone number (n) and a migration indicator (X) into that function.

6. Method according to claim 5, wherein the migration indicator (X) includes or consists of a prefix.

7. Method according to claim 5 or 6, wherein the migration indicator (X) indicates that the entered telephone number (n) is to be called via the second network system (N2).

8. Method according to any of claims 5-7, wherein the migration indicator (X) is associated with the second network system (N2), wherein the first network system (N1) redirects any calls that include the migration indicator, to the second network system (N2).

9. Method according to any of the preceding claims, wherein the setting of the call forwarding function is executed before disconnecting the telephone connection (1) from the first network system (N1).

10. Method according to any of the preceding claims, wherein an intelligent network (IN) is being updated with the migration of the network subscriber telephone connection (1), after the telephone connection has been connected to the second network system (N2).

11. Communication network, at least comprising:
- a circuit switched telephone network system (N1);
- a packet switched telephone network system (N2);
- at least one subscriber telephone connection (1), associated with a respective subscriber telephone number (n); and
- at least one local network distribution unit (5) to interconnect the at least one subscriber telephone connection (1) to the telephone network systems (N1, N2);
the telephone network system being **characterized by** a migration support mechanism (CFS) that is configured to be operated by a network migration operator to support migration of the telephone connection (1) from the circuit switched telephone network system (N1) to the packet switched telephone network system (N2), wherein the migration support mechanism includes a call forwarding system (CFS) of the circuit switched telephone network system (N1).

12. Communication network according to claim 11, wherein the migration support mechanism is configured to enter a migration indicator (X) and the respective subscriber telephone number (n) into the call forwarding system (CFS), wherein the migration indicator is associated with the second network system (N2), wherein the first network system is configured to redirect any calls that include the migration indicator, to the second network system (N2).

13. Communication network according to claim 11 or 12, wherein the call forwarding system is a Call Forwarding No Reply (CFNR) system, configured to forward incoming calls after a predetermined delay.

14. Use of a telephone network call forwarding system as part of a subscriber telephone connection migration process, wherein the respective subscriber telephone number (n) is entered into the telephone network call forwarding system, together with a migration indicator (X), wherein the migration indicator is selected to be automatically used to redirect incoming calls to the subscriber telephone connection via a network system to be migrated to.
